# EUROPEAN PATENT APPLICATION

(11) **EP 2 631 842 A1**
(43) Date of publication of application: **28.08.2013**
(21) Application number: 13156246.4
(22) Date of filing: 21.02.2013
(51) Int. Cl.: G06K 7/10

(54) **RFID reading terminal with directional antenna**

(30) Priority: 23.02.2012 US 201213403191
(71) Applicant: Honeywell International Inc., NJ 07962-2245 (US)
(72) Inventor: Wang, Yujiun Paul, Morristown, NJ New Jersey 07962-2245 (US); Qu, Huyu, Morristown, NJ New Jersey 07962-2245 (US)
(74) Representative: Houghton, Mark Phillip

(57) **Abstract**

A radio frequency identifier (RFID) reading terminal can comprise a microprocessor, a memory, and an RFID reading device including a directional antenna. The RFID reading device can be configured to output raw message data containing an encoded message and/or output decoded message data corresponding to an encoded message. The RFID reading terminal can further comprise an aiming light source configured to emit aiming light, and at least one aiming lens configured to direct the aiming light onto a target to produce a visible aiming pattern at least partially contained within a projection onto the target of a coverage shape of the RF signal emitted by the directional antenna.

## Description

### CROSS REFERENCE TO RELATED APPLICATIONS

This application claims priority to U. S. Patent Application No. 13/403,191 filed February 23, 2012 entitled, "RFID Reading Terminal with Directional Antenna." The priority of the above application is claimed and is incorporated herein by reference in its entirety.

### FIELD OF THE INVENTION

The invention is generally related to radio frequency identifier (RFID) devices and is specifically related to RFID tags and RFID reading devices quipped with directional antennas.

### BACKGROUND OF THE INVENTION

RFID methods are widely used in a number of applications, including smart cards, item tracking in manufacturing, inventory management in retail, *etc.* An RFID tag can be attached, *e.g*., to an inventory item. An RFID reading terminal can be configured to read the memory of an RFID tag attached to an inventory item.

### SUMMARY OF THE INVENTION

In one embodiment, there is provided a radio frequency identifier (RFID) reading terminal comprising a microprocessor, a memory, and an RFID reading device including a directional antenna. The RFID reading device can be configured to output raw message data containing an encoded message and/or output decoded message data corresponding to an encoded message. The RFID reading terminal can further comprise an aiming light source configured to emit aiming light, and at least one aiming lens configured to direct the aiming light onto a target to produce a visible aiming pattern at least partially contained within a projection onto the target of a coverage shape of the RF signal emitted by the directional antenna.

In one embodiment, at least one aiming lens can be configured to direct the aiming light onto the target to produce the visible aiming pattern fully contained within the projection onto the target of the coverage shape of the RF signal emitted by the directional antenna.

In one embodiment, at least one aiming lens can be configured to direct the aiming light onto the target to produce the visible aiming pattern so that a central axis be of the visible aiming pattern substantially coincides with a central axis be of the projection onto the target of the coverage shape of the RF signal emitted by the directional antenna.

In one embodiment, at least one aiming lens can be configured to direct the aiming light onto the target to produce the visible aiming pattern so that a center of the visible aiming pattern substantially coincides with a center of the projection of the coverage shape of the RF signal emitted by the directional antenna.

In one embodiment, the RFID reading terminal can further comprise an EIR device selected from the group consisting of: a bar code reading device and a card reading device, the EIR device configured to perform at least one of: outputting raw message data containing an encoded message and outputting decoded message data corresponding to an encoded message.

In one embodiment, the RFID reading terminal can be further configured to activate the aiming light source responsive to a user interface action.

In one embodiment, the aiming light source can be provided by a laser diode.

In one embodiment, the directional antenna can be made of a material having a composite right- and left-handed (CRLH) structure.

In one embodiment, the directional antenna can comprise one or more spatially separated conductive cell patches mounted on a dielectric substrate, a feed pad mounted on the dielectric substrate, one or more conductive feed lines connected to the feed pad, and one or more ground planes mounted on the dielectric substrate. The conductive feed lines can be spatially separated from the conductive cell patches. The conductive cell patches can be connected by one or more vias to one or more conductive via lines.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:

Fig. 1 schematically illustrates a visual indication of areas covered by the radio frequency (RF) signal emitted by the directional antenna of the RFID reading terminal;

Figs. 2a-2c schematically illustrate one embodiment of an RFID reading terminal;

Figs. 3a-3b schematically illustrate various types of a visible aiming pattern projected onto the scanning target;

Fig. 4 illustrates a network layout of a data collection system employing RFID reading terminals;

Fig. 5 depicts a component-level layout of an RFID reading terminal;

Figs. 6-10 illustrate various embodiments of multiple cell metamaterial (MTM) antennas.

The drawings are not necessarily to scale, emphasis instead generally being placed upon illustrating the principles of the invention. In the drawings, like numerals are used to indicate like parts throughout the various views.

### DETAILED DESCRIPTION OF THE INVENTION

RFID reading devices usually offer improved efficiency over barcode scanning devices for retail inventory, by being capable of reading multiple RFID tags that are within range of the RF signal transmitted by an RFID reading device. A downside to this multiple-read capability is lack of scanned items localization, due to insufficient correlation between where the RFID reader is located or oriented, and the RFID tags being read. Retail inventory management typically requires more than 90% of the RFID tags present in a department to be successfully acquired during the inventory process.

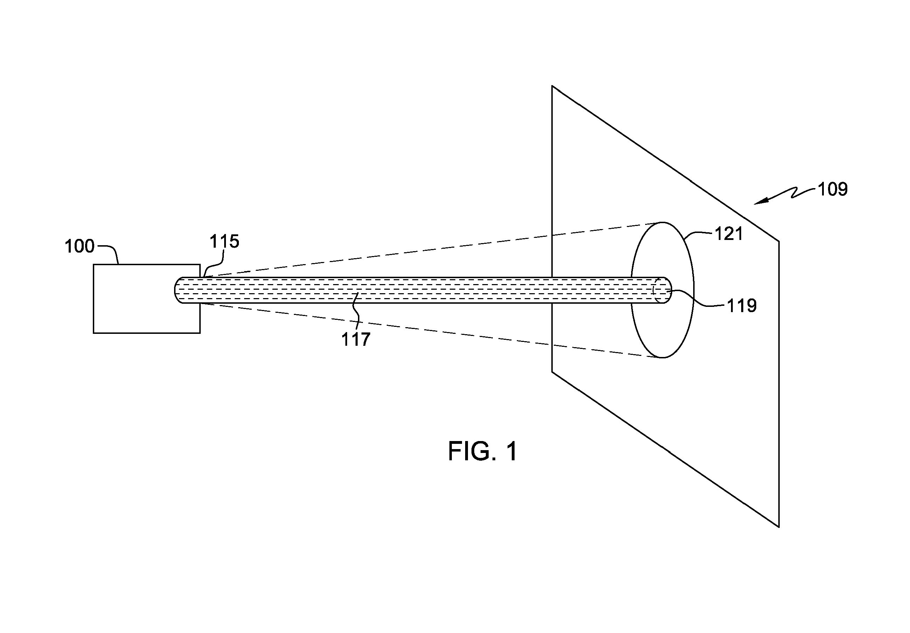

To improve the scanning reliability, there is provided a portable radio-frequency identifier (RFID) reading terminal equipped with a directional antenna. The RFID reading terminal 100 can be configured to provide a visual indication of areas covered by the radio frequency (RF) signal emitted by the directional antenna, as schematically shown in Fig. 1. The visual indication can be provided by the light emitted by an aiming light source and directed by one or more aiming lenses. The aiming lenses 115 can be configured to direct the aiming light beam 117 onto a target 109 to produce a visible aiming pattern 119, so that the visible aiming pattern 119 be at all times at least partially contained within a projection 121 onto the target 109 of a coverage shape 123 of an RF signal emitted by the directional antenna. Hence, the visible aiming pattern can provide a feedback to the operator of the RFID reading terminal with respect to the direction and/or boundaries of the directional antenna coverage.

Various embodiments of the RFID reading terminal can be used in a numerous applications, including but not limited to, item tracking in manufacturing, storage, and retail, real-time inventory control systems, *etc*. Item tracking and/or inventory control can be implemented by placing an RFID tag on each inventory item. The RFID reading terminal can comprise at least one RFID reading device which can be configured to read and/or modify a memory of an RFID tag containing an encoded message. The RFID reading device can transmit and/or receive radio frequency (RF) signals to and from RFID tags attached to inventory items. Each RFID tag can store the tag identifier in its memory. An RFID tag attached to an inventory item can further store in the tag's memory a product code of the item, an EPC (Electronic Product Code) of the item, and/or at least one alphanumeric string identifying the item.

The RFID reading device can be further configured to output decoded message data corresponding to the encoded message, *e.g*., decoded message data containing identifiers of the items to which the RFID tags are attached. In a further aspect, the RFID reading terminal can be configured to store in its memory and/or transmit to an external computer the item identifiers received from the plurality of RFID tags.

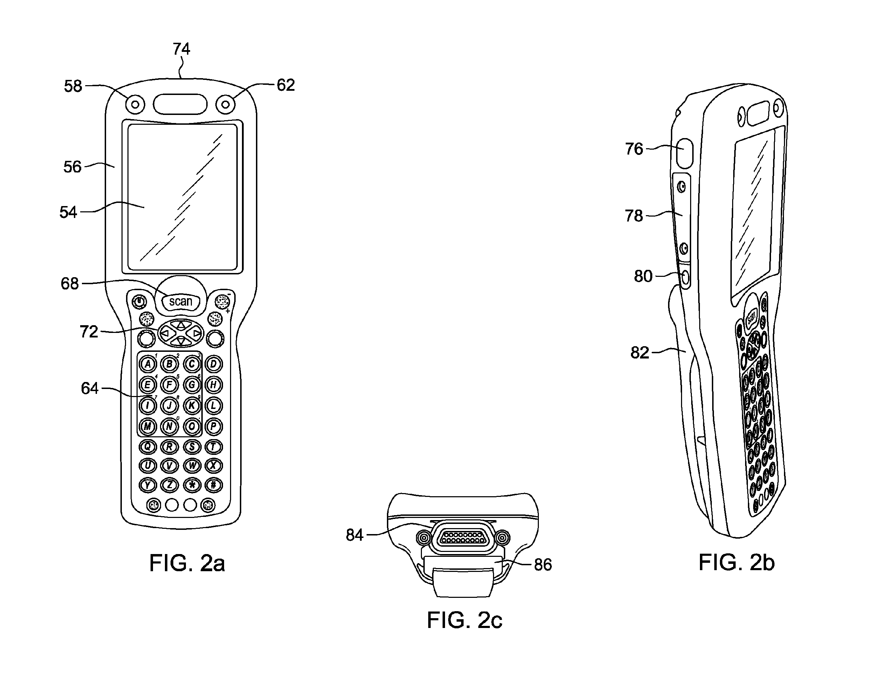

One embodiment of RFID reading terminal 100 is shown in in Figs. 2a (front panel view), 2b (side panel view), and 2c (bottom panel view). RFID reading terminal 100 can comprise housing 52 within which other components of RFID reading terminal 100 can be disposed. LCD screen display with touch screen sensor 54 can be disposed on the front panel 56. Also disposed on front panel 56 can be decode LED 58, scan led 62, and keyboard 64 including scan key 68 and navigation keys 72. Imaging window 74 can be disposed on the top panel of housing 52. Disposed on the side panel (best viewed in Fig. 2b) can be infra-red communication port 76, access door to a secure digital (SD) memory interface 78, audio jack 80, and hand strap 82. Disposed on the bottom panel (best viewed in Fig. 2c) can be multi-pin mechanical connector 84 and hand strap clip 86.

At any moment in time, the RF signal coverage emitted by an RFID reading terminal can be defined by a three-dimensional shape 123, as schematically shown in Fig. 1. The form and size of the 3D shape defining the RF signal coverage can depend, among other factors, on the number and configuration of the RF antennas employed by the RFID reading device, and on the power level of the RF signal emitted by the antennas. For omnidirectional antennas, the three-dimensional signal coverage shape can be provided by a sphere. For directional antennas, the three-dimensional signal coverage shape can be provided, for example, by a cone 123, as schematically shown in Fig. 1. A skilled artisan would appreciate the fact that other RF signal coverage shapes are within the scope of this disclosure.

As noted herein *supra,* the RFID reading terminal can further comprise an aiming light source configured to produce aiming light. The RFID reading terminal can further comprise at least one aiming lens 115 which can be adapted so that visible aiming pattern 119 be at least partially contained within the projection 121 of the RF signal coverage shape onto the target 109. "Target" herein shall refer to a physical object disposed fully or partially within the coverage shape of the RF signal emitted by the directional antenna of the RFID reading terminal. A target can be provided, for example, an inventory item, or a physical structure containing one or more inventory items (*e.g*., a box, a shipping container, or a shelf).

In one embodiment, the visible aiming pattern can comprise one or more aiming spots 119, as shown in Fig. 1. An aiming spot can be provided by a planar shape (*e.g*., a polygon or an ellipse). Alternatively, the visible aiming pattern can comprise one or more straight or curved lines. In a yet another embodiment, the visible aiming pattern can comprise one or more aiming spots and one or more straight or curved lines. A skilled artisan would appreciate the fact that various aiming patterns are within the scope of this disclosure.

The coverage shape of the RF signal emitted by the directional antenna of the RFID reading terminal 100 can be provided by a conical shape 123, and thus the projection of the signal coverage shape onto a planar target 109 can be provided by an ellipse 121 (which can become a circle if the central axis of the conical shape 123 is substantially orthogonal to the planar target 109). At least one aiming lens 115 can be adapted disposed relatively to the position and the orientation of the RF antenna so that the visible aiming pattern 119 be at least partially contained within the projection 121 of the RF signal coverage shape onto the target 109.

In one embodiment, at least one aiming lens 115 can be configured to direct the aiming light so that the visible aiming pattern 119 projected onto the target 109 be fully contained within the projection 121 onto the target 109 of the coverage shape of the RF signal emitted by the directional antenna, as schematically shown in Fig. 1.

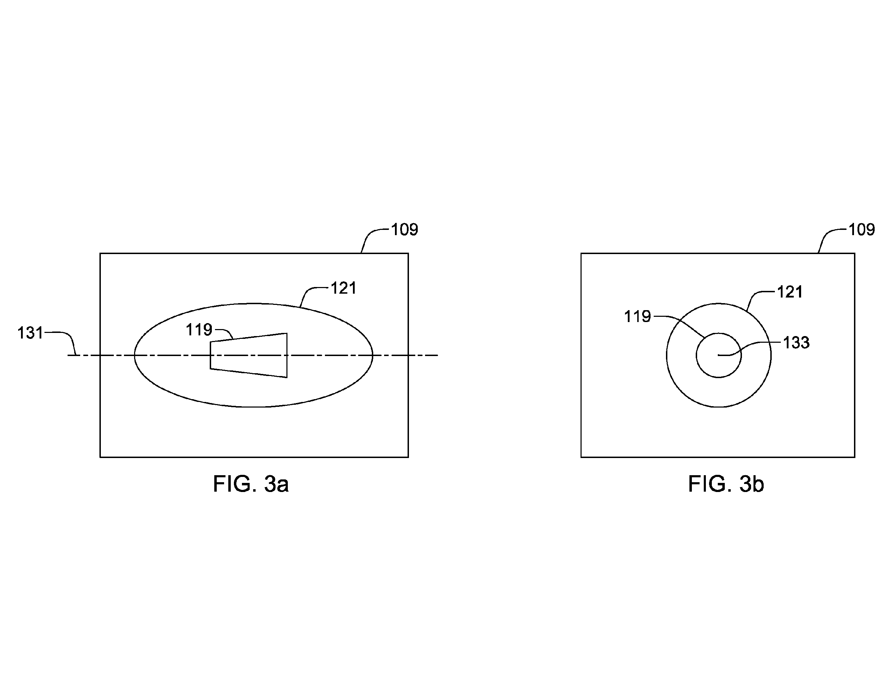

In another embodiment, schematically shown in Fig. 3a, the visible aiming pattern 119 projected onto the target 109 can have at least one axis of symmetry 131. At least one aiming lens 115 can be configured to direct the aiming light so that the axis 131 of the visible aiming pattern 119 substantially coincide with an axis of symmetry of the projection 121 onto the target 109 of the coverage shape of the RF signal emitted by the directional antenna.

In a yet another embodiment, schematically shown in Fig. 3b, the visible aiming pattern 119 projected onto the target 109 can have a center of symmetry 133. At least one aiming lens 115 can be configured to direct the aiming light so that the center 133 of the visible aiming pattern 119 substantially coincide with the center of symmetry of the projection 121 onto the target 109 of the coverage shape of the RF signal emitted by the directional antenna.

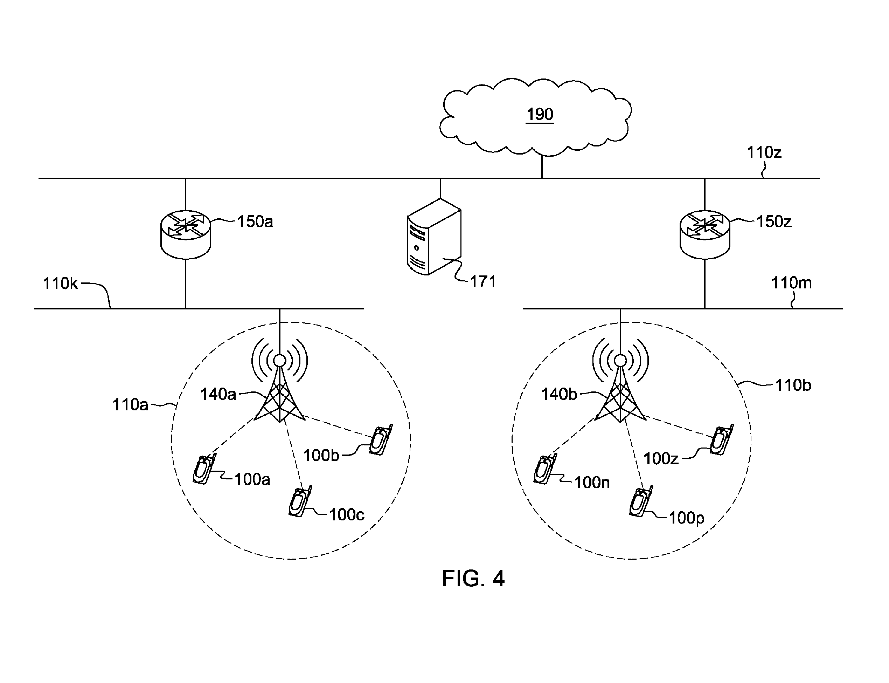

In a further aspect, the RFID reading terminal can be incorporated in a data collection system. The data collection system, schematically shown in Fig. 4, can include a plurality of RFID reading terminals 100a-100z in communication with a plurality of interconnected networks 110a-110z. In one aspect, the plurality of networks 110a-110z can include at least one wireless communication network. In a further aspect, an RFID reading terminal can comprise a communication interface which can be used by the terminal to connect to one or more networks 110a-110z. In one embodiment, the communication interface can be provided by a wireless communication interface.

The RFID reading terminal 100c can establish a communication session with the external computer 171. In one embodiment, network frames can be exchanged by the RFID reading terminal 100 and the external computer 171 via one or more routers, base stations, and other infrastructure elements. In another embodiment, the external computer 171 can be reachable by the RFID reading terminal 100 via a local area network (LAN). In a yet another embodiment, the external computer 171 can be reachable by the RFID reading terminal 100 via a wide area network (WAN). A skilled artisan would appreciate the fact that other methods of providing interconnectivity between the RFID reading terminal 100 and the external computer 171 relying upon LANs, WANs, virtual private networks (VPNs), and/or other types of network are within the scope of this disclosure.

In one embodiment, the communications between the RFID reading terminal 100 and the external computer 171 can comprise a series of HTTP requests and responses transmitted over one or more TCP connections. In one embodiment, the communications between the RFID reading terminal 100c and the external computer 171 can comprise VoIP traffic transmitted over one or more TCP and/or UDP ports. A skilled artisan would appreciate the fact that using other transport and application level protocols is within the scope and the spirit of the invention.

In one aspect, at least one of the messages transmitted by the RFID reading terminal can include decoded message data corresponding to, *e.g*., an RFID tag attached to a product or to a shipment item. For example, an RFID reading terminal can transmit a request to the external computer to retrieve product information corresponding to a product identifier encoded by an RFID tag attached to the product, or to transmit an item tacking record for an item identified by an RFID tag attached to the product.

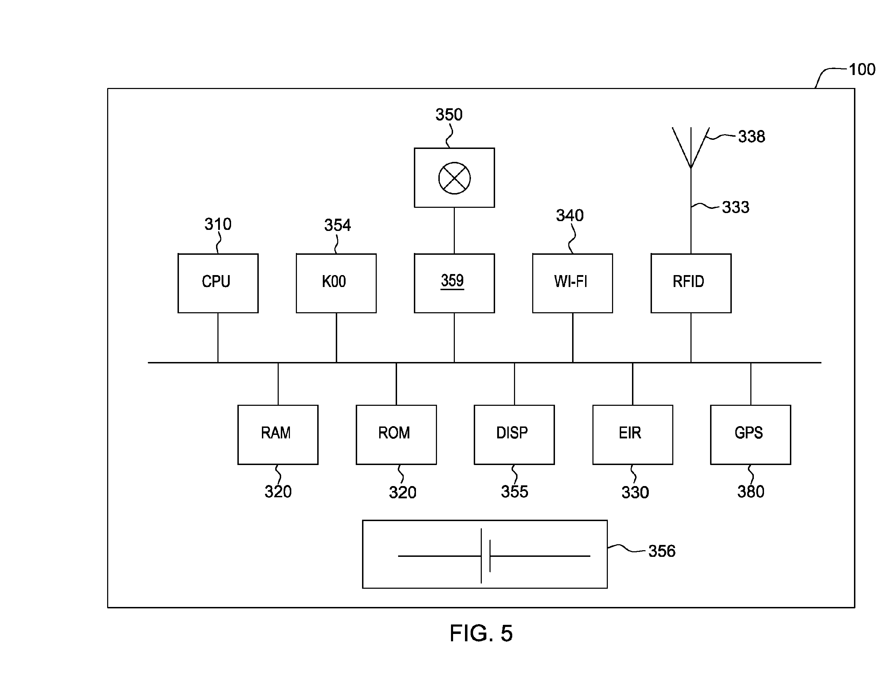

Component-level diagram of one embodiment of an RFID reading terminal is now being described with references to Fig. 5. RFID reading terminal 100 can comprise at least one microprocessor 310 and a memory 320, both coupled to the system bus 370. The microprocessor 310 can be provided by a general purpose microprocessor or by a specialized microprocessor (*e.g*., an ASIC). In one embodiment, RFID reading terminal 100 can comprise a single microprocessor which can be referred to as a central processing unit (CPU). In another embodiment, RFID reading terminal 100 can comprise two or more microprocessors, for example, a CPU providing some or most of the RFID reading terminal functionality and a specialized microprocessor performing some specific functionality. A skilled artisan would appreciate the fact that other schemes of processing tasks distribution among two or more microprocessors are within the scope of this disclosure.

RFID reading terminal 100 can further comprise a communication interface 340 communicatively coupled to the system bus 370. In one embodiment, the communication interface can be provided by a wireless communication interface. The wireless communication interface can be configured to support, for example, but not limited to, the following protocols: at least one protocol of the IEEE 802.11/802.15/802.16 protocol family, at least one protocol of the HSPA/GSM/GPRS/EDGE protocol family, TDMA protocol, UMTS protocol, LTE protocol, and/or at least one protocol of the CDMA/1xEV-DO protocol family.

RFID reading terminal 100 can further comprise a keyboard interface 354 and a display adapter 355, both also coupled to the system bus 370. RFID reading terminal 100 can further comprise a battery 356. In one embodiment, the battery 356 can be provided by a replaceable rechargeable battery pack.

RFID reading terminal 100 can further comprise a GPS receiver 380. RFID reading terminal 100 can further comprise at least one connector 390 configured to receive a subscriber identity module (SIM) card.

RFID reading terminal 100 can further comprise one or more EIR devices 330, provided, for example, but not limited to, by an RFID reading device, a bar code reading device, or a card reading device. In one embodiment, the RFID terminal can be configured to read an encoded message using EIR device 330, and to output raw message data containing the encoded message. In another embodiment, the RFID terminal can be configured to read an encoded message using EIR device 330, and to output decoded message data corresponding to the encoded message. As used herein, "message" is intended to denote a character string comprising alphanumeric and/or non-alphanumeric characters. An encoded message can be used to convey information, such as identification of the source and the model of a product, for example, in a UPC code.

Of course, devices that read bar codes, read RFID, or read cards bearing encoded information may read more than one of these categories while remaining within the scope of this disclosure. For example, a device that reads bar codes may include a card reader, and/or RFID reader; a device that reads RFID may also be able to read bar codes and/or cards; and a device that reads cards may be able to also read bar codes and/or RFID. For further clarity, it is not necessary that a device's primary function involve any of these functions in order to be considered such a device; for example, a cellular telephone, smartphone, or PDA that is capable of reading bar codes is a device that read bar codes for purposes of this disclosure.

As noted herein *supra,* in one embodiment, RFID reading terminal 100 can further comprise an RFID reading device 333. RFID reading terminal 100 can be configured to read RFID tags containing decoded messages. In one embodiment, the RFID terminal can be configured to read, using RFID reading device 333, an RFID tag containing an encoded message, and to output raw message data containing the encoded message. In another embodiment, the RFID terminal can be configured to read, using RFID reading device 333, an RFID tag containing an encoded message, and to output decoded message data corresponding to the encoded message. In a further aspect, the RFID reading device can comprise an antenna 338.

In one embodiment, RFID reading terminal 100 can further comprise an aiming light source 350. In one embodiment, the aiming light source can be provided by one or more laser LEDs. The aiming light source can be controlled by the aiming light controller 359 communicatively coupled to the system bus 370. In one embodiment, the RFID reading terminal 100 can be configured to activate the aiming light responsive to a user interface action (*e.g*., a push button being pressed).

In one embodiment, the antenna 338 of Fig. 5 can be provided by a metamaterial (MTM) antenna. Metamaterials are artificial composite materials engineered to produce a desired electromagnetic behavior which surpasses that of natural materials. MTM-based objects can include structures which are much smaller than the wavelength of electromagnetic waves propagating through the material. MTM technology advantageously allows for precise control of the propagation of electromagnetic waves in the confines of small structures by determining the values of operating parameters which can include operating frequency, bandwidth, phase offsets, constant phase propagation, matching conditions, and number and positioning of ports.

In one aspect, an MTM antenna can be physically small as compared to other types of antennas: an MTM antenna can be sized, for example, on the order of one tenths of a signal's wavelength, while providing performance equal to or better than an antenna made of a conventional material and sized on the order of one half of the signal's wavelength. Thus, for a frequency range of 860 MHz - 930 MHz, an MTM antenna can have a size of 33 mm.

The ability of an MTM antenna to produce a desired electromagnetic behavior can be explained by the fact that while most natural materials are right-handed (RH) materials (i.e. propagation of electromagnetic waves in natural materials follows the right-hand rule for the trio (E, H, β), where E is the electrical field, H is the magnetic field, and β is the phase velocity) exhibiting a positive refractive index, a metamaterial due to its artificial structure can exhibit a negative refractive index and follow the left-hand rule for the trio (E, H, β). A metamaterial exhibiting a negative refractive index can be a pure left-handed (LH) metamaterial by simultaneously having negative permittivity and permeability. A metamaterial can combine RH and LH features (Composite Right and Left Handed (CRLH) materials).

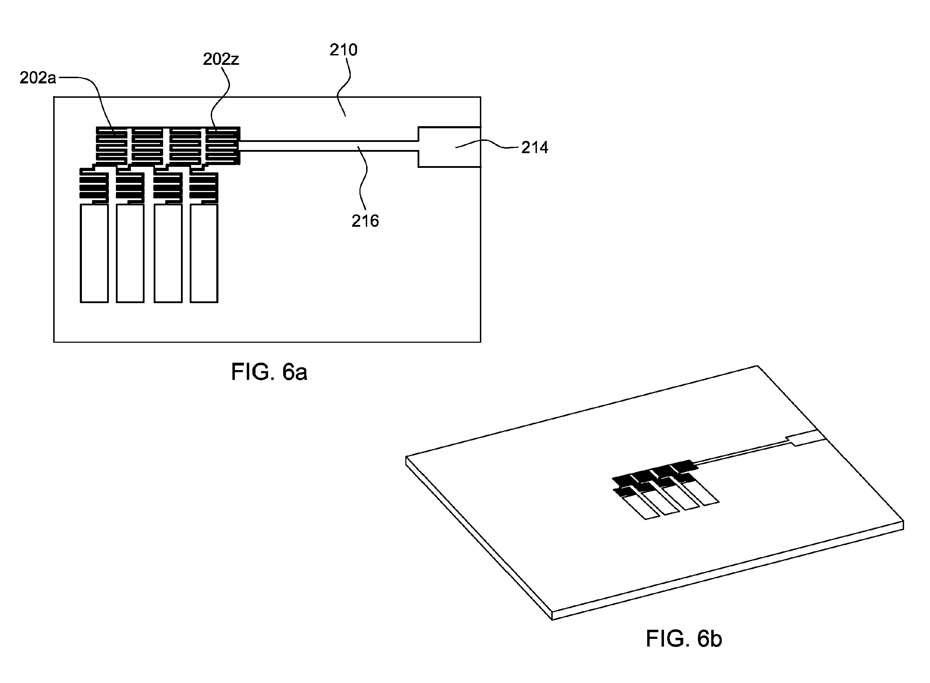

In one embodiment, antenna 338 of Fig. 5 can be provided by a multiple cell MTM antenna shown in Figs. 6a (top view) and 6b (3D view). Antenna 338 can comprise one or more conductive cell patches 202a-202z that can be mounted on a dielectric substrate, provided, for example, by a printed circuit board (PCB) 210. Conductive cell patches 202a-202z can be spatially separated so that capacitive couplings between adjacent cell patches can be created. Also disposed on the dielectric substrate 210 can a feed pad 214 that can be provided, *e.g*., by a metallic plate and can be connected to a conductive feed line 216. Conductive feed line 216 can be provided, *e.g*., by metallic a strip. Conductive feed line 216 can be located close but separately from conductive cell patches 202a-202b. A skilled artisan would appreciate the fact that MTM antennas having two or more conductive feed lines are within the scope of this disclosure. A ground plane can be provided by a metallic layer disposed on the bottom side of PCB 210 (not shown in Fig. 6a). Each cell patch can be connected to the ground plane by a via.

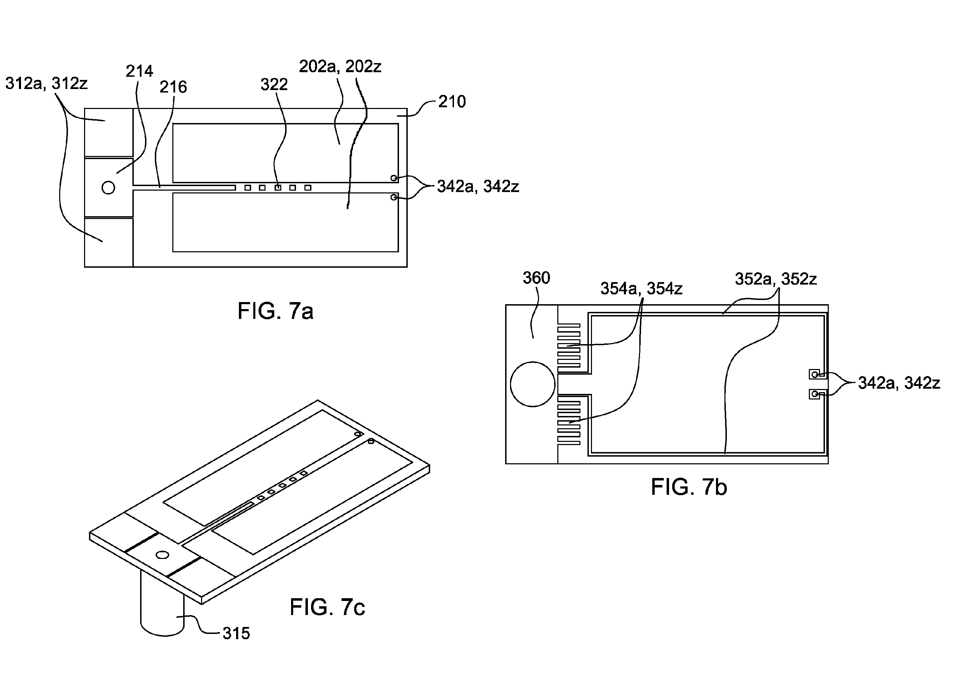

In one embodiment, antenna 338 of Fig. 5 can be provided by a multiple cell MTM antenna shown in Figs. 7a (top view), 7b (bottom view), and 7c (3D view). Antenna 338 can comprise one or more conductive cell patches 202a-202z that can be mounted on a dielectric substrate, provided, for example, by a printed circuit board (PCB) 210. Conductive cell patches 202a-202z can be spatially separated so that capacitive couplings between adjacent cell patches can be created. Also disposed on the top surface of dielectric substrate 210 can be a feed pad 214 that can be provided, *e.g*., by a metallic plate and can be connected to a conductive feed line 216. Conductive feed line 216 can be provided, *e.g*., by a metallic strip, and can be located close but separately from conductive cell patches 202a-202z. A skilled artisan would appreciate the fact that MTM antennas having one or more conductive feed lines are within the scope of this disclosure. At least one conductive feed line can comprise a feed line tuner 322 provided by a conductive strip having a curved line form or an open polygon line form. A feed line tuner can be used to adjust resonant frequency of antenna 338 as explained herein *infra.*

In one embodiment, feed pad 214 can be electrically coupled to coaxial cable connector 315. In one embodiment, shown in Fig. 7c, coaxial cable connector 315 can be connected from the bottom side of antenna 338. In another embodiment, coaxial cable connector 315 can be connected from a lateral side of antenna 338. In a yet another embodiment, feed pad 214 can be electrically coupled to a twisted cable.

Also disposed on the top surface of dielectric substrate 210 can be one or more ground planes 312a-312z provided, *e.g*., by one or more metallic plates.

One or more conductive cell patches 202a-202z can be connected by one or more vias 342a-342z to one or more conductive via lines 352a-352z disposed on the bottom surface of dielectric substrate 210. At least one conductive via line 352a-352z can comprise a via line tuner 354a-354z provided by a conductive strip having a curved line form or an open polygon line form. A via line tuner can be used to adjust resonant frequency of antenna 338 as explained herein *infra.* Also disposed on the bottom surface of dielectric substrate 210 can be a bottom ground plane 360.

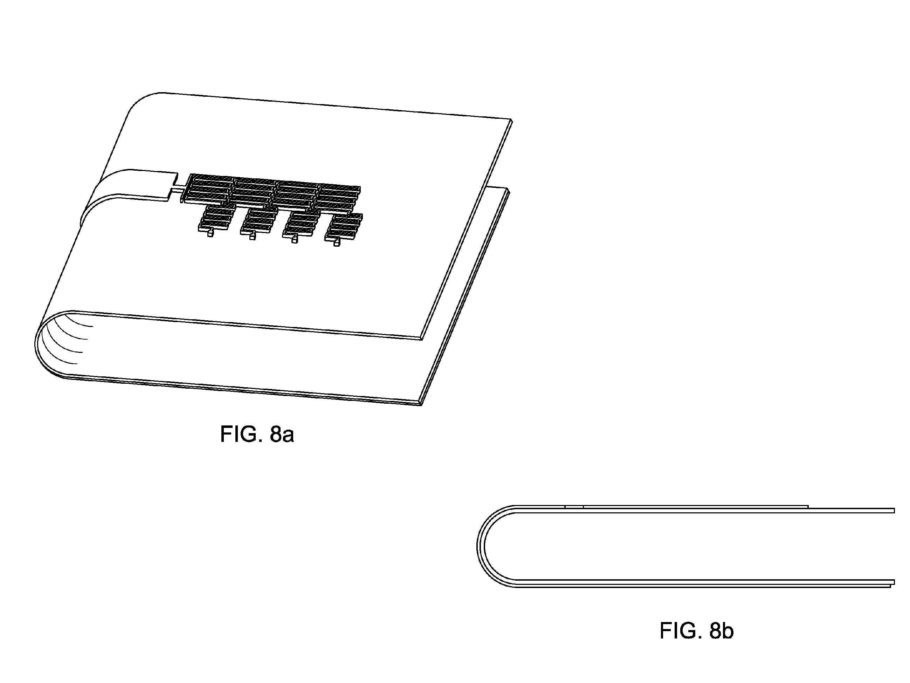

In one embodiment, dielectric substrate 210 can have a folded plane form-factor, as shown in Figs. 8a (3D view) and 8b (side view). The gap between the two ends of the folded plane can be unfilled (air gap) or can be filled with a dielectric material. The folded design can advantageously offer extra air gap (or can be filled with other material). In another aspect, due to the folded design, a multi-layer MTM design can be implemented without inter-connections.

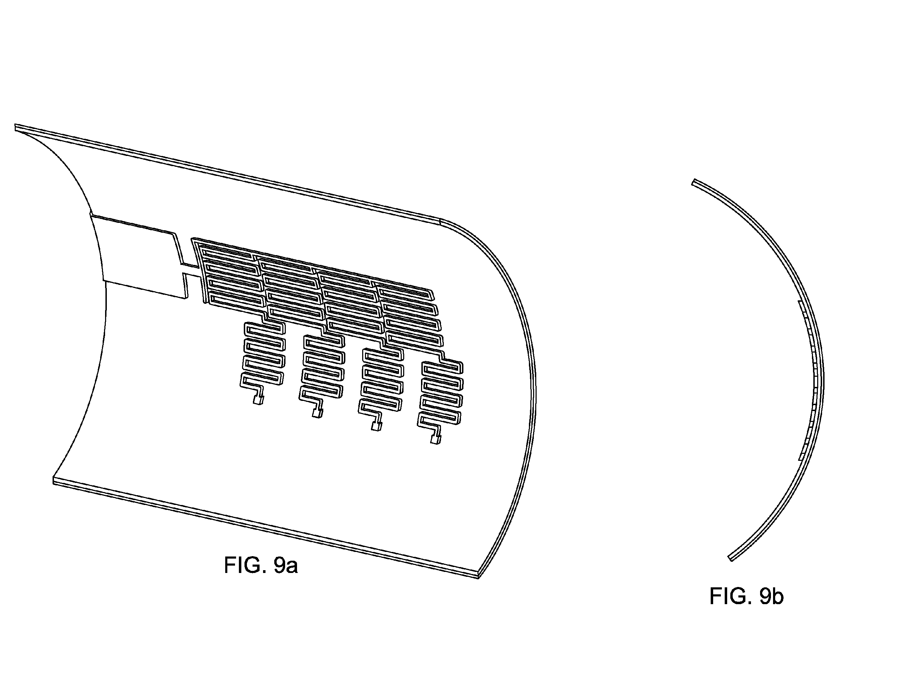

In one embodiment, dielectric substrate 210 can have a curved plane form-factor, as shown in Figs. 9a (3D view) and 9b (side view). The gap between the two ends of the folded plane can be unfilled (air gap) or can be filled with a dielectric material. A skilled artisan would appreciate the fact that MTM antennas mounted on dielectric substrates having a more complex form factors (*e.g*., a 3D surface) are within the scope of this disclosure. A curved surface can advantageously provide additional tune to the antenna directivity. A more complicated 3D surface can be constructed by folding and wrapping on object having a desired shape, such as a cone.

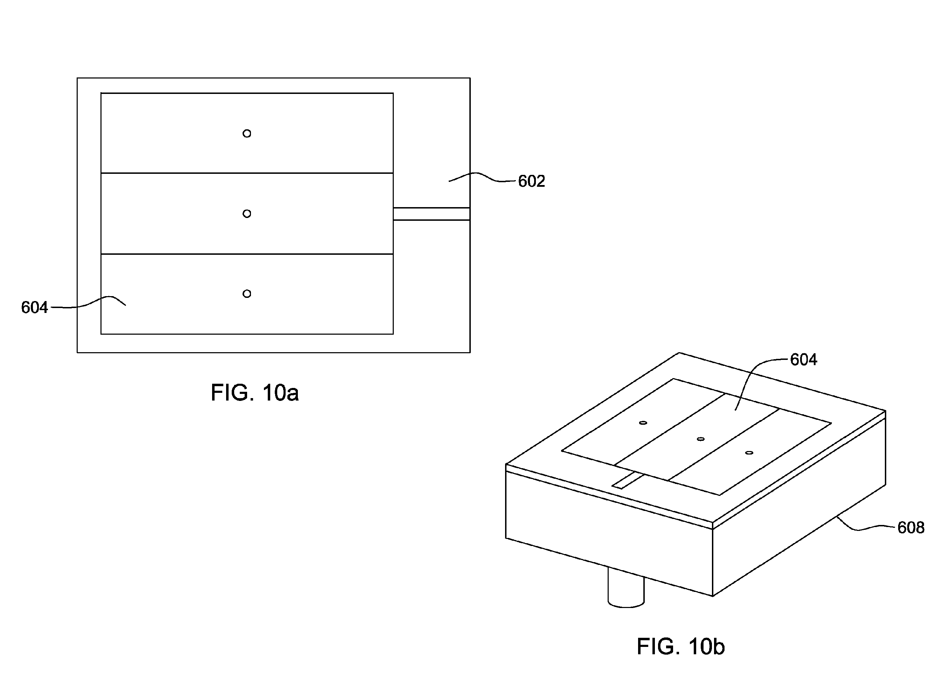

In one embodiment, antenna 338 of Fig. 5 can be provided by a mushroom-shape MTM antenna shown in Figs. 10a (top view) and 10b (3D view). In one embodiment, the gap between the feed line 602 and the top patch 604 can form a capacitor (left-hand); the via between the top patch 604 and the bottom ground 608 can form an inductance (left-hand).

In a further aspect, antenna 338 of Fig. 5 can be broadband, ultrawideband (UWB), or multiband (MB). Antenna 338 of Fig. 5 can be designed to support the desired functionality and characteristics. Antenna size, resonant frequencies, bandwidth, and matching properties can be controlled by changing the antenna design parameters including number and size of cells, the gap between the cells, the gap between the feed line and the cells, the size (radius and height) and location of vias, the length and width of the feed line, the length and width of the via line, the material and thickness of the substrate, and various other dimensions and layouts.

Antenna size and resonant frequency can be controlled by the patch shape and size. Cell patches can have a rectangular, triangular, circular or other shape. The most efficient antenna area usage can be provided by a rectangular shape. In a further aspect, the resonant frequency can be sensitive to the via line length. To control the via line length, a via line tuner can be provided having a straight line form, a curved line form, or an open polygon line form. The via line length can be used to adjust resonant frequency due to its left hand inductive character. In a further aspect, the resonant frequency can be sensitive to the feed line length and the size of the gap between a feed line and a cell patch. To control the feed line length, a feed line tuner can be provided having a straight line form, a curved line form, or an open polygon line form. The feed line length can be used to adjust resonant frequency due to its left hand capacitive character. In a further aspect, the resonant frequency can be sensitive to the thickness of the substrate on which the antenna components are disposed. The substrate thickness can range from 0.1mm to 150mm depending upon the substrate material. Various materials having different permittivity can be used, for example, but not limited to, FR4 (εᵣ=4.4), Getek (εᵣ =4.0), Polyimide (εᵣ =3.5), Polyester (εᵣ =3.9), Arlon AD250 (εᵣ =2.5), RT/duroid 5880 (εᵣ =2.2), *etc.*

In another aspect, an antenna can comprise a single cell or multiple cells. A multi-cell antenna can have a smaller resonant frequency shift as compared to a single cell antenna, but also can have a higher peak gain due to a better beam concentration.

In another aspect, the antenna return loss can be controlled by the radius of one or more vias that connect the cell patches and the ground plane: vias having smaller radius can provide a better return loss.

In one embodiment, the communication interface 340 and RFID reading device can share one MTM antenna 338.

In a further aspect, RFID reading device 333 can be compliant with *EPC*™ *Class-1 Generation-2 UHF RFID Protocol for Communications at 860 MHz - 960 MHz* by EPCglobal, commonly known as the "Gen 2" standard, which defines physical and logical requirements for a passive-backscatter, Interrogator-talks-first (ITF) RFID system operating in the 860 MHz - 960 MHz frequency range.

In one embodiment, RFID reading terminal 100 can transmit information to a passive RFID tag by modulating an RF signal in the 860-960MHz frequency range. An RFID tag can receive both information and operating energy from the RF signal transmitted by RFID reading terminal 100. RFID reading terminal 100 can receive information from the RFID tag by transmitting a continuous-wave (CW) RF signal to the RFID tag. "Continuous wave" can refer to any waveform transmitted by an RFID reading device and suitable to power a passive RFID tag, *e.g*., a sinusoid at a given frequency. The RFID tag can respond by modulating the reflection coefficient of its antenna, thus backscattering an information signal to the RFID reading terminal 100. In one embodiment, the RFID tag can modulate the reflection coefficient of its antenna only responsive to receiving an RFID signal from RFID reading terminal 100.

In a further aspect, RFID reading terminal 100 can be configured to send information to one or more RFID tags by modulating an RF carrier using double-sideband amplitude shift keying (DSB-ASK), single-sideband amplitude shift keying (DSB-ASK), or phase-reversal amplitude shift-keying (PR-ASK) using a pulse-interval encoding (PIE) format. RFID tags can receive their operating energy from the same modulated RF carrier.

RFID reading terminal 100 can be configured to receive information from an RFID tag by transmitting an unmodulated RF carrier and listening for a backscatter reply. RFID tags can transmit information by backscatter-modulating the amplitude and/or phase of the RFID carrier. RFID tags can encode the backscattered data using, *e.g.,* FM0 baseband or Miller modulation of a subcarrier at the data rate. The encoding method to be employed by an RFID tag can be selected by RFID reading terminal 100.

In another aspect, the communication link between RFID reading terminal 100 and an RFID tag can be half-duplex, meaning that the RFID tag is not required to demodulate RFID reading terminal's commands while backscattering. A *half-duplex* system means communication in both directions, but only one direction at a time (not simultaneously). Typically, once a party begins receiving a signal, it must wait for the transmitter to stop transmitting, before replying.

In another aspect, RFID reading terminal can establish one or more sessions with one or more RFID tags. An RFID tag can support at least one session-dependent flag for every session. The session-dependent flag can have two states. An RFID tag can invert a session-dependent flag responsive to receiving a command from RFID reading terminal 100. Tag resources other than session-dependent flags can be shared among sessions. In another aspect, an RFID tag can support a selected status flag indicating that the tag was selected by RFID reading terminal 100.

Responsive to receiving an interrogation signal transmitted by RFID reading terminal 100, an RFID tag can transmit a response signal back to RFID reading terminal 100. The response signal can contain useful data, *e.g*., an Electronic Product Code (EPC) identifier, or a tag identifier (TID). The response signal can include a representation of a binary string, at least part of which is equal to at least part one of the specified one or more target item identifiers.

In one embodiment, RFID reading terminal can implement *EPC*™ *Class-1 Generation-2 UHF RFID Protocol for Communications at 860 MHz - 960 MHz* by EPCglobal. RFID reading terminal 100 can interrogate RFID tags using the commands described herein infra.

*Select* command can be used by RFID reading terminal 100 to select a particular RFID tag population for the subsequent inventory round. *Select* command can be applied successively to select a particular tag population based on user-specified criteria. *Select* command can include the following parameters:
- *Target* parameter indicates whether *Select* command modifies a tag's *SL* flag or *Inventoried* flag, and in the latter case it further specifies one of four available sessions (S0,.., S3);
- *Action* parameter indicates whether matching tags assert or deassert *SL* flag, or set their *Inventoried* flag to A or B state; tags conforming to the contents of *MemBank, Pointer, Length,* and *Mask* parameters are considered to be matching;
- *Mask* parameter contains a bit string that a tag should compare to a memory location specified by *MemBank, Pointer,* and *Length* parameters;
- *MemBank* parameter specifies the memory bank to which *Mask* parameter refers (*EPC*, *TID*, or *User*);
- *Pointer* parameter specifies a memory start location for *Mask*;
- *Length* parameter specifies the number of bits of memory for *Mask;* if *Length* is equal to zero, all tags are considered matching.

*Inventory* command set can be used by RFID reading terminal 100 to single out one or more individual tags from a group. A tag can maintain up to four simultaneous sessions and a binary *Inventoried* flag for each session. *Inventory* command set includes the following commands:
- *Query* command can be used to initiate and specify an inventory round; it contains a slot counter value (*Q*=0 to 15) determining the number of slots in the round; the command also includes *Sel* parameter specifying which tags should respond to the *Query.*
- *QueryAdjust* command can be used to adjust the value of the tag's slot counter Q without changing any other parameters;
- *QueryRep* command can be used to repeat the last Query command;
- *Ack* command can be used to acknowledge a tag's response;
- *NAK* command can be used to force a tag to change its state to *Arbitrate.*

An RFID tag can implement a state machine. Once energized, a tag can change its current state to *Ready.* A selected tag can, responsive to receiving *Query* command, select a random integer from the range of [0; 2^{Q-1}]. If the value of zero is selected, the tag can transition to *Reply* state, backscaterring a 16-bit random number. If a non-zero value is selected, the tag can load the selected random integer into its slot counter and change its state to *Arbitrate.*

Responsive to receiving the tag transmission, RFID reading terminal can acknowledge it with *Ack* command containing the same random number. Responsive to receiving *Ack* command, the tag can change its state to *Acknowledged* and backscatter its protocol control (PC) bits, EPC and cyclic redundancy check (CRC) value. Unacknowledged tag can select a new random integer from the range of [0; 2^{Q-1}], load the value into its slot counter, and change its state to *Arbitrate.* Responsive to receiving *QueryAdjust* command, a tag in the *Arbitrate* state should decrement the value of its slot counter and backscatter its protocol control (PC) bits, EPC and CRC value if its slot counter is equal to zero.

Responsive to receiving the tag's transmission of its PC, EPC and 16-bit CRC value, RFID reading terminal can send a *QueryAdjust* command causing the tag to invert its *Inventoried* flag and to transition to *Ready* state.

*Access* command set can be used by RFID reading terminal 100 for communicating with (reading from and writing to) a tag. An individual tag must be uniquely identified prior to access. Access command set includes the following commands:

*ReqRn* command can be used by RFID reading terminal 100 to request a handle from a tag; the handle can be used in the subsequent *Access* command set commands. Responsive to receiving Req_RN commands, a tag returns a 16-bit random integer (handle) and transitions from *Acknowledged* to *Open* or *Secured* state.

*Read* command can be used by RFID reading terminal 100 to read tag's *Reserved, EPC*, *TID* and *User* memory;

*Write* command can be used by RFID reading terminal 100 to write to tag's *Reserved, EPC, TID* and *User* memory;

*Kill* command can be used by RFID reading terminal 100 to permanently disable a tag;

*Lock* command can be used by RFID reading terminal 100 to lock passwords preventing subsequent read or write operations; lock individual memory banks preventing subsequent write operations; permanently lock the lock status of passwords or memory banks;

*Access* command can be used by RFID reading terminal 100 to cause a tag having a non-zero access password to transition from *Open* to *Secured* state.

A skilled artisan would appreciate the fact that other methods of interrogating RFID tags by RFID reading terminal 100 are within the scope of this disclosure.

While the present invention has been particularly shown and described with reference to certain exemplary embodiments, it will be understood by one skilled in the art that various changes in detail may be affected therein without departing from the spirit and scope of the invention as defined by claims that can be supported by the written description and drawings. Further, where exemplary embodiments are described with reference to a certain number of elements it will be understood that the exemplary embodiments can be practiced utilizing less than the certain number of elements.

A small sample of systems methods and apparatus that are described herein is as follows:
A1. A radio frequency identifier (RFID) reading terminal comprising:
   a microprocessor;
   a memory;
   an RFID reading device configured to perform at least one of: outputting raw message data containing an encoded message and outputting decoded message data corresponding to an encoded message, said RFID reading device including a directional antenna;
   an aiming light source configured to emit aiming light;
   at least one aiming lens configured to direct said aiming light onto a target to produce a visible aiming pattern at least partially contained within a projection onto said target of a coverage shape of an RF signal emitted by said directional antenna.
A2. The RFID reading terminal of (A1), wherein said at least one aiming lens is configured to direct said aiming light onto said target to produce said visible aiming pattern fully contained within said projection onto said target of said coverage shape of said RF signal emitted by said directional antenna.
A3. The RFID reading terminal of (A1), wherein said at least one aiming lens is configured to direct said aiming light onto said target to produce said visible aiming pattern so that a central axis of said visible aiming pattern substantially coincides with a central axis of said projection onto said target of said coverage shape of said RF signal emitted by said directional antenna.
A4. The RFID reading terminal of (A1), wherein said at least one aiming lens is configured to direct said aiming light onto said target to produce said visible aiming pattern so that a center of said visible aiming pattern substantially coincides with a center of said projection of said coverage shape of said RF signal emitted by said directional antenna.
A5. The RFID reading terminal of (A1), further comprising an EIR device selected from the group consisting of: a bar code reading device and a card reading device, said EIR device configured to perform at least one of: outputting raw message data containing an encoded message and outputting decoded message data corresponding to an encoded message.
A6. The RFID reading terminal of (A1), further configured to activate said aiming light source responsive to a user interface action.
A7. The RFID reading terminal of (A1), wherein said aiming light source is provided by a laser diode.
A8. The RFID reading terminal of (A1), wherein said directional antenna is made of a material having a composite right- and left-handed (CRLH) structure.
A9. The RFID reading terminal of (A1), wherein said antenna comprises one or more spatially separated conductive cell patches mounted on a dielectric substrate, a feed pad mounted on said dielectric substrate, one or more conductive feed lines connected to said feed pad, and one or more ground planes mounted on said dielectric substrate;
   wherein said one or more conductive feed lines are spatially separated from said one or more conductive cell patches; and
   wherein said one or more conductive cell patches are connected by one or more vias to one or more conductive via lines.
A10. The RFID reading terminal of (A9), comprising two or more ground planes; and
   wherein at least two of said two or more ground planes are disposed on opposite surfaces of said dialectic substrate.
A11. The RFID reading terminal of (A9), wherein said dielectric substrate is provided by a printed circuit board.
A12. The RFID reading terminal of (A9), wherein at least one of said conductive cell patches has one of: a rectangular shape, a triangular shape, a circular shape.
A13. The RFID reading terminal of (A9), wherein said dielectric substrate has a form factor selected from the group consisting of: a curved plane, a folded plane, a 3D surface.
A14. The RFID reading terminal of (A9), wherein said feed pad is electrically coupled to one of: a coaxial cable connector, a twisted cable connector.

## Claims

1. A radio frequency identifier (RFID) reading terminal comprising:
a microprocessor;
a memory;
an RFID reading device configured to perform at least one of: outputting raw message data containing an encoded message and outputting decoded message data corresponding to an encoded message, said RFID reading device including a directional antenna;
an aiming light source configured to emit aiming light;
at least one aiming lens configured to direct said aiming light onto a target to produce a visible aiming pattern at least partially contained within a projection onto said target of a coverage shape of an RF signal emitted by said directional antenna.

2. The RFID reading terminal of claim 1, wherein said at least one aiming lens is configured to direct said aiming light onto said target to produce said visible aiming pattern fully contained within said projection onto said target of said coverage shape of said RF signal emitted by said directional antenna.

3. The RFID reading terminal of claim 1, wherein said at least one aiming lens is configured to direct said aiming light onto said target to produce said visible aiming pattern so that a central axis of said visible aiming pattern substantially coincides with a central axis of said projection onto said target of said coverage shape of said RF signal emitted by said directional antenna.

4. The RFID reading terminal of claim 1, wherein said at least one aiming lens is configured to direct said aiming light onto said target to produce said visible aiming pattern so that a center of said visible aiming pattern substantially coincides with a center of said projection of said coverage shape of said RF signal emitted by said directional antenna.

5. The RFID reading terminal of claim 1, further comprising an EIR device selected from the group consisting of: a bar code reading device and a card reading device, said EIR device configured to perform at least one of: outputting raw message data containing an encoded message and outputting decoded message data corresponding to an encoded message.

6. The RFID reading terminal of claim 1, further configured to activate said aiming light source responsive to a user interface action.

7. The RFID reading terminal of claim 1, wherein said aiming light source is provided by a laser diode.

8. The RFID reading terminal of claim1, wherein said directional antenna is made of a material having a composite right- and left-handed (CRLH) structure.

9. The RFID reading terminal of claim 1, wherein said antenna comprises one or more spatially separated conductive cell patches mounted on a dielectric substrate, a feed pad mounted on said dielectric substrate, one or more conductive feed lines connected to said feed pad, and one or more ground planes mounted on said dielectric substrate;
wherein said one or more conductive feed lines are spatially separated from said one or more conductive cell patches; and
wherein said one or more conductive cell patches are connected by one or more vias to one or more conductive via lines.

10. The RFID reading terminal of claim 9, wherein said antenna comprises two or more ground planes; and
wherein at least two of said two or more ground planes are disposed on opposite surfaces of said dialectic substrate.

11. The RFID reading terminal of claim 9, wherein said dielectric substrate is provided by a printed circuit board.

12. The RFID reading terminal of claim 9, wherein at least one of said conductive cell patches has one of: a rectangular shape, a triangular shape, a circular shape.

13. The RFID reading terminal of claim 9, wherein said dielectric substrate has a form factor selected from the group consisting of: a curved plane, a folded plane, a 3D surface.

14. The RFID reading terminal of claim 9, wherein said feed pad is electrically coupled to one of: a coaxial cable connector, a twisted cable connector.
